(19) Europäisches Patentamt / European Patent Office / Office européen des brevets

(11) **EP 1 750 114 A2**

(12) **EUROPEAN PATENT APPLICATION**

(43) Date of publication:
**07.02.2007 Bulletin 2007/06**

(51) Int Cl.:
***G01N 11/00*** *(2006.01)*

(21) Application number: **06016001.7**

(22) Date of filing: **01.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **02.08.2005 JP 2005223594**

(71) Applicant: **SYSMEX CORPORATION**
**Kobe-shi,**
**Hyogo 651-0073 (JP)**

(72) Inventors:
- **Usui, Hiromoto**
  **Kobe-shi, Hyogo 654-0151 (JP)**
- **Komoda, Yoshiyuki**
  **Kobe-shi, Hyogo 658-0045 (JP)**
- **Nakashima, Kazuhiro**
  **Kobe-shi, Hyogo 651-0073 (JP)**

(74) Representative: **Hoffmann, Klaus**
**Hoffmann - Eitle**
**Patent- und Rechtsanwälte**
**Arabellastrasse 4**
**D-81925 München (DE)**

(54) **Powder measuring system and powder measuring method**

(57)     A powder measuring system is described, a representative one of which includes: a holding vessel for holding a powder; a mixing blade for mixing the powder held in the holding vessel; detecting part for detecting a load on the mixing blade when the mixing blade rotates in the powder; and a control part for obtaining a viscosity as a powder characteristic based on the load detected by the detecting part.

[Fig. 1]

**Description**

FIELD OF THE INVENTION

The present invention relates to a powder measuring system and powder measuring method, and particularly relates to a powder measuring system and powder measuring method for determining an indicator representing the characteristics (flow properties) of a dry powder.

BACKGROUND

Conventional powder measuring devices are known which detect the load on a mixing blade that moves and mixes a powder in a holding vessel, and evaluate the flow properties of the powder (For example, refer to EPO 798549) . This powder measuring device is configured by a holding vessel and mixing blade that are mutually rotatable about an axis, and are mutually mobile in the axial direction. The mixing blade is driven in a direction holding down the powder within the holding vessel, and the load on the mixing blade is detected and the flow properties of the powder are evaluated.
The powder measuring device disclosed in EPO 798549 displays an energy variation as the flow properties of the powder based on the load on the mixing blade, however, the energy variation is unfamiliar with a user as a parameter representing the flow properties of the powder and makes difficult to understand for the user.

SUMMARY

The scope of the present invention is defined solely by the appended claims, and is not affected to any degree by the statements within this summary.
An object of the present invention is to provide a powder measuring system and powder measuring method that is possible to obtain a parameter as the flow properties of the powder to be familiar for the user.
The powder measuring system of a first aspect of the present invention includes: a holding vessel for holding a powder; a mixing blade for mixing the powder held in the holding vessel; detecting part for detecting a load on the mixing blade when the mixing blade rotates in the powder; and a control part for obtaining a viscosity as a powder characteristic based on the load detected by the detecting part.
The powder measuring method of a second aspect of the present invention includes: a step of detecting a load when a mixing blade descends through a powder of a holding vessel and rotates in a lifting direction of the powder; and a step of obtaining a viscosity as a powder characteristic based on the detected load on the mixing blade.

BRIEF DESCRIPTION OF THE DRAWINGS

Fig. 1 is a perspective view showing the overall structure of the powder measuring system of an embodiment of the present invention;
Fig. 2 is a schematic view of the embodiment of the powder measuring system of Fig. 1;
Fig. 3 is a frontal view of the mixing part of the embodiment of the powder measuring system of Fig. 1;
Fig. 4 is a schematic view showing the holding vessel and mixing blade of the embodiment of the powder measuring system of Fig. 1;
Fig. 5 is a top view showing the aerator of the embodiment of the powder measuring system of Fig. 1;
Fig. 6 is a block diagram of the main part of the powder measuring device of the embodiment of the powder measuring system of Fig. 1;
Fig. 7 is a block diagram of the control part of the powder measuring device of the embodiment of the powder measuring system of Fig. 1;
Fig. 8 is a block diagram of the PC of the embodiment of the powder measuring system of Fig. 1;
Fig. 9 is a graph showing the axial torque load relative to the height of the mixing blade of the embodiment of the powder measuring system of Fig. 1;
Fig. 10 is a graph showing the relationship between the viscosity detected by a viscometer, and the axial torque load detected by the powder measuring device of the embodiment of the powder measuring system of Fig. 1;
Fig. 11 is a graph showing the viscosity of a dry powder relative to the shear rate of the mixing blade of the powder measuring device of the embodiment of the powder measuring system of Fig. 1;
Fig. 12 is a graph showing the relationship between the viscosity and the solid volume fraction of the dry powder at a mixing blade rotation speed of 80 mm/s in the embodiment of the powder measuring system of Fig. 1;
Fig. 13 is a graph showing the relationship between the theoretical dispersion medium viscosity when the solid volume fraction is 0 and the mixing blade rotation speed of the embodiment of the powder measuring system of Fig. 1;
Fig. 14 is a flow chart showing the measurement flow of the dry powder performed by the control part of the powder measuring device of the embodiment of the powder measuring system of Fig. 1;

Fig. 15 is a flow chart showing the data processing flow of the CPU of the embodiment of the powder measuring system of Fig. 1; and

Fig. 16 is a graph showing the inter-particle bonding energy and the number of particle agglomeration relative to the shear rate of the mixing blade of the embodiment of the powder measuring system of Fig. 1.

## DETAILED DESCRIPTION OF THE PREFERRED EMBODIMENT

The embodiment of the present invention is described hereinafter based on the drawings.

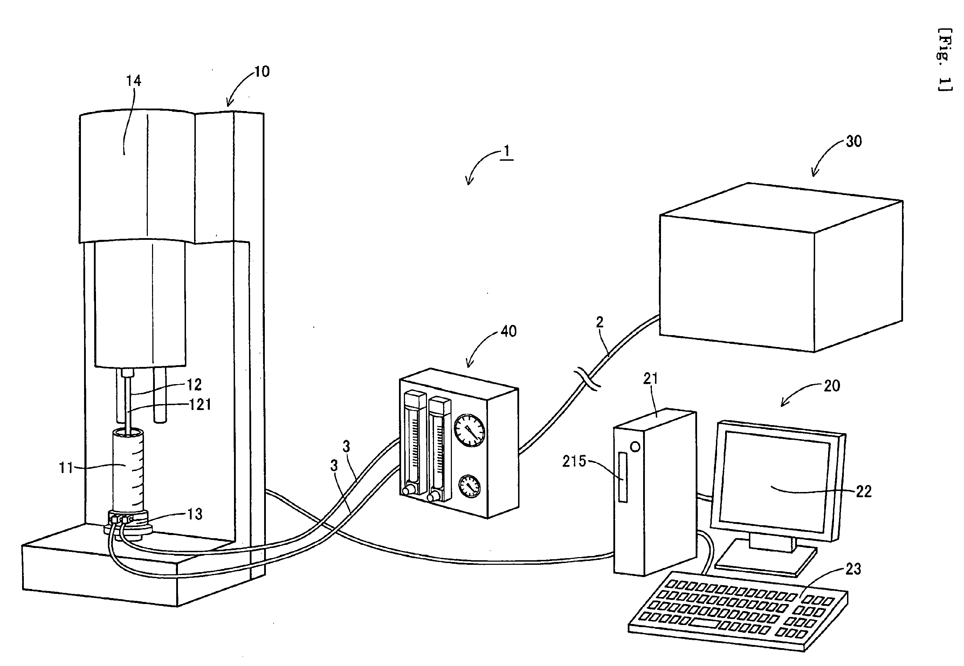

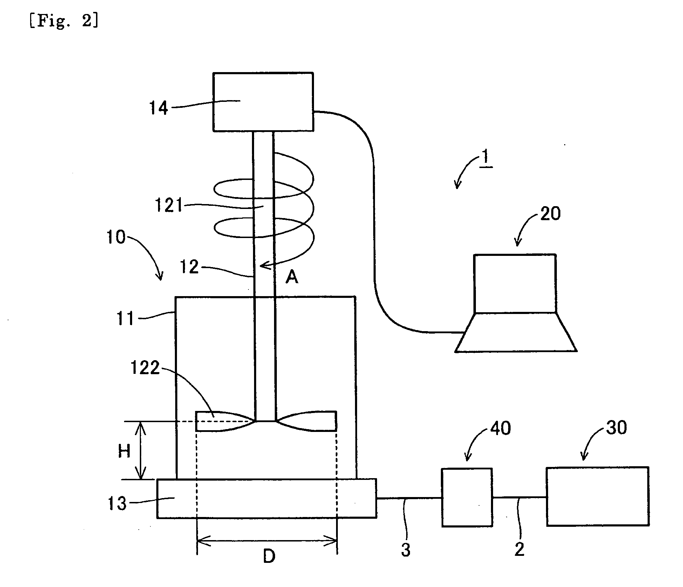

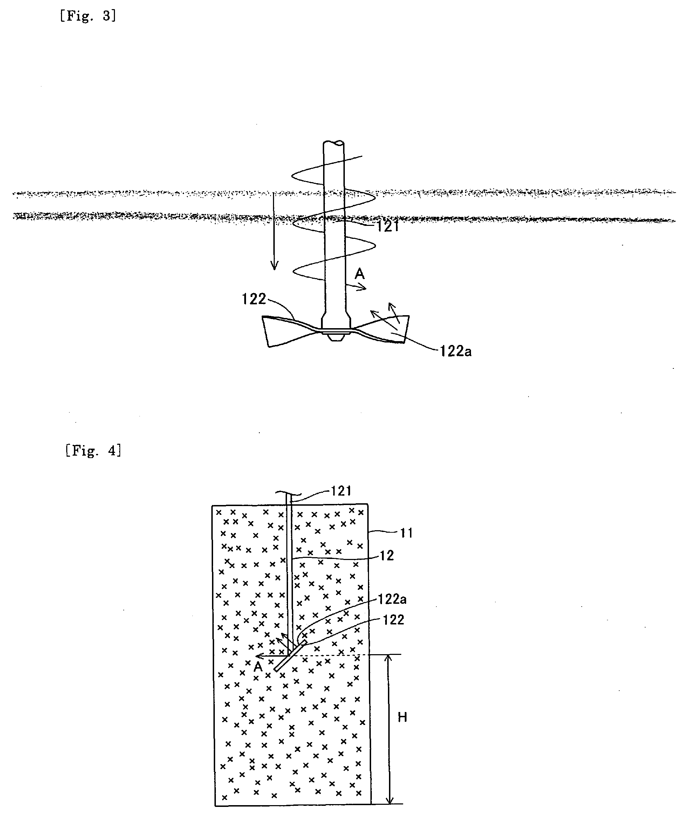

Fig. 1 is a perspective view showing the overall structure of an embodiment of the powder measuring system of the present invention, and Fig. 2 is a schematic view of the embodiment of the powder measuring system of Fig. 1. Figs. 3 through 13 illustrate the configuration of the embodiment of the powder measuring system of Fig. 1. The structure of the embodiment of the powder measuring system of Fig. 1 is described below with reference to Figs. 1 through 13.

The powder measuring system 1 of the embodiment of the present invention is a system for evaluating the flow properties of a dry powder layer, and determines the viscosity as an indicator of the flow properties of the dry powder layer. That is, the present embodiment of the powder measuring system 1 is a system that determines the viscosity of a suspension in a two-phase solid-gas system of air (gas) and dry powder (solid) . The powder measuring system 1 has a function for determining the number of particle agglomeration and inter-particle bonding energy of a dry powder based on a viscosity indicator representing the flow properties of the dry powder layer. Silica (KE-P150 having a particle diameter of 1.58 $\mu$m and specific gravity of 2.0; Japan Catalyst, Ltd.) is used as the measurement sample dry powder. The powder measuring system 1 is configured by a powder measuring device 10, personal computer (PC) 20, compressor 30, and air flow regulator 40 connected to the compressor 30 via a tube 2.

The powder measuring device 10 is provided to determine the axial torque load (mNm) of a two-phase solid-gas suspension of dry powder and air stored in a holding vessel 11 described later. The personal computer 20 is connected to the powder measuring device 10 so as to be capable of communicating via a wire line (or wireless), and the axial torque load T, pressure (weight), and other data measured by the powder measuring device 10 are mutually transmitted. The powder measuring device 10 is provided with a holding vessel 11 for holding a dry powder, mixing part 12, aerator 13, and body 14.

The holding vessel 11 is provided to hold a dry powder measurement sample. The holding vessel 11 is formed in a cylindrical shape having a volume of 50.0 ml, internal diameter of 25.0 mm, and height of 50.0 mm. The holding vessel 11 is installed on the aerator 13 so that it is possible to feed air from the aerator, which is described later, to the dry powder held in the holding vessel.

In the present embodiment, the mixing part 12 has a rotating shaft 121, and a mixing blade 122 mounted on the rotating shaft 121, as shown in Fig. 3; the mixing blade 122 is configured so as to be movable in vertical directions relative to the holding vessel 11 that holds the dry powder, and rotatable in the arrow A direction in Figs. 2 and 3. Accordingly, in the present embodiment, the dry powder layer is lifted upward and mixed when the mixing blade 122 of the mixing part 12 rotates in the arrow A direction in Figs. 2 and 3 while descending into the dry powder of the holding vessel 11. Specifically, when the mixing blade 122 rotates in the arrow A direction as shown in Fig. 4, the dry powder layer disposed on the top side surface 122a of the mixing blade 122 is mixed and lifted upward by the top surface 122a of the mixing blade 122. The mixing blade 122 has a diameter of size D (=23.5 mm) and a height 5.0 mm, as shown in Figs. 2 and 3, and can be inserted into the cylindrical holding vessel 11, which has an internal diameter of 25.0 mm. The mixing blade 122 is configured so as to be movable in a height range (bottom surface 5 mm to upper part 50 mm) from the bottom surface of the holding vessel 11 to a height H (refer to Figs. 2 and 4).

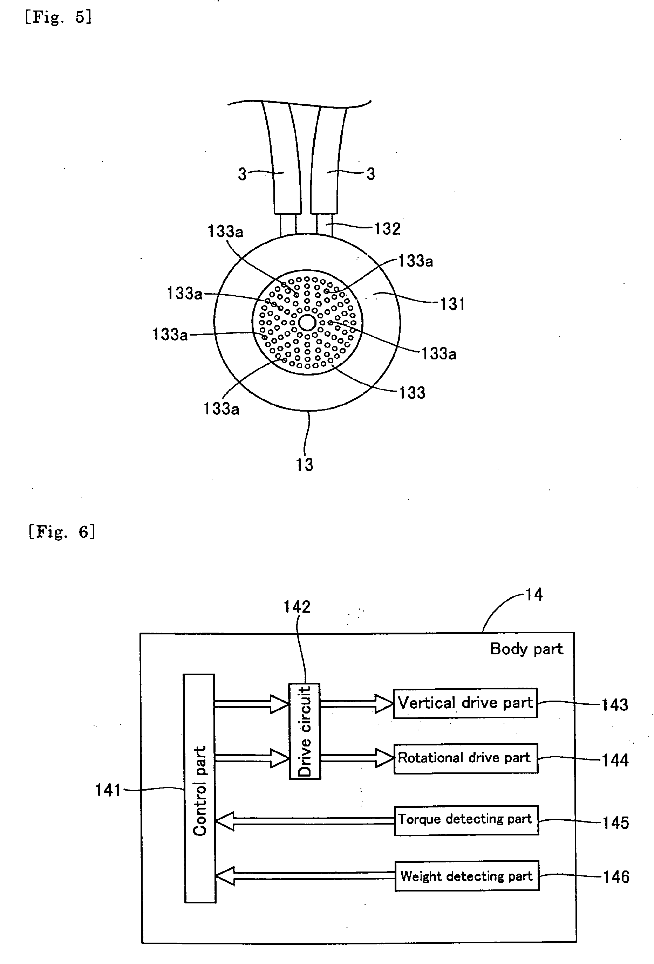

The aerator 13 is provided at the bottom of the holding vessel 11 that holds the dry powder, and is connected to the air flow regulator 40 via two tubes 3. The aerator 13 is provided to regulate the solid volume fraction $\phi$ (=(weight (g)/specific gravity (g/ml) of the dry powder within the holding vessel 11)/volume (ml) of the holding vessel 11) of the dry powder held in the holding vessel 11 via air from the compressor 30, which regulates the air flow by means of the air flow regulator 40. That is, the distance between particles of the dry powder is changed so as to change the solid volume fraction $\phi$ indicating the condition of the dry powder by supplying air supplied from the compressor 30 and having an airflow regulated by the air flow regulator 40 from the bottom part of the holding vessel 11 through the aerator 13 to the dry powder held in the holding vessel 11. Specifically, the solid volume fraction $\phi$ of the dry powder can be regulated at 0.344, 0.302, and 0.257 by supplying air via airflows of 0 (1/min), 1 (1/min), and 2 (1/min) from the aerator 13 to the dry powder of the holding vessel 11. Furthermore, as shown in Fig. 5, the aerator 13 is provided with a base part 131 for mounting the holding vessel 11, guide part 132 for mounting the tubes 3 that direct the air supplied from the compressor 30 through the air flow regulator 40, and a baffle part 133 having a plurality of baffle holes 133a for delivering the air introduced from the guide part 132 to the dry powder held in the holding vessel 11.

As shown in Fig. 6, the body part 14 is disposed at the upper part of the powder measuring device 10, and includes a control part 141, drive circuit 142, vertical drive part 143, rotation drive part 144, torque detecting part 145, and weight detecting part 146.

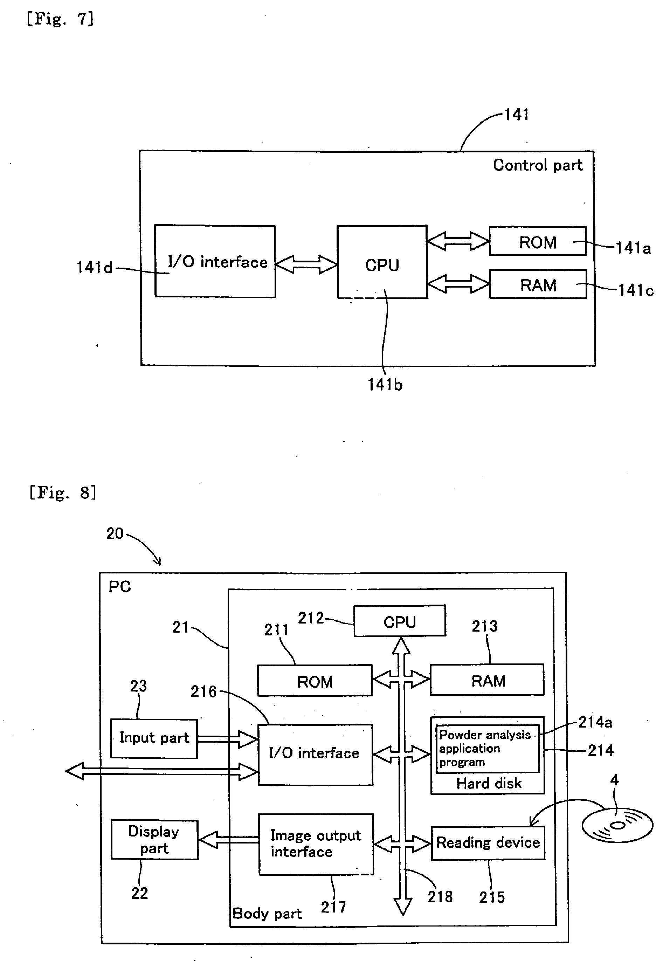

The control part 141 has the functions of controlling the vertical operation of the mixing blade 122 of the mixing part 12 by controlling the vertical drive part 143, and controlling the rotational operation of the mixing blade 122 by controlling the rotation drive part 144, via the drive circuit 142. The control part 141 also has a function of transmitting vertical drive pulse signals for driving the vertical drive part 143 to the personal computer 20. The control part 141 is configured by a ROM 141a, CPU 141b, RAM 141c, and input/output (I/O) interface 141d, as shown in Fig. 7.

An operating system, control program FOr controlling the measurement operation of the powder measuring device 10, and data necessary for the execution of the control program (vertical drive pulse signal, rotational drive pulse signal and the like) are stored in the ROM 141a. The CPU 141b is provided to load the control program stored in the ROM 141a to the RAM 141c, and directly execute the control program from the RAM 141c. Thus, the CPU 141b can control the measurement operation of the powder measuring device 10 by executing the control program. The data processed by the CPU 141b are transmitted through the I/O interface 141d to each part of the powder measuring device 10 and to the personal computer 20, and the data requiring processing by the CPU 141b are received through the I/O interface 141d from each part of the powder measuring device 10 and the personal computer 20. Specifically, the CPU 141b fetches the vertical drive pulse signal stored beforehand in the ROM 141a, and transmits the signal to the vertical drive part 143 via the I/O interface 141d and drive circuit 142, and fetches the rotational drive pulse signal stored beforehand in the ROM 141a, and transmits the signal to the rotational drive part 144 via the I/O interface 141d and the drive circuit 142. The CPU 141b has the function of storing the vertical drive pulse signal sent to the vertical drive part 143, and the axial torque load T detected by the torque detecting part 145 in the RAM 141c.

The vertical drive part 143 is provided to move the mixing blade 122 of the mixing part 12 in vertical directions. Specifically, the mixing blade 122 of the mixing part 12 mounted on the vertical drive part 143 is moved in vertical directions when the vertical drive part 143 receives a vertical drive pulse signal fetched from the ROM 141a by the CPU 141b. Thus, the mixing blade 122 can descend and ascend in the dry powder held in the holding vessel 11.

The rotational drive part 144 is provided to rotate the mixing blade 122 of the mixing part 12. Specifically, the rotating shaft 121 of the mixing part 12 mounted on the rotational drive part 144 is rotated when the rotational drive part 144 receives a rotational drive pulse signal fetched from the ROM 141a by the CPU 141b. Thus, the dry powder held in the holding vessel 11 can be mixed because the mixing blade 122 mounted on the rotational shaft 121 is rotated. In the present embodiment, the rotational drive part 144 controls the rotational speed $\pi ND$ (mm/s) of the mixing blade 122 of the mixing part 12 at 5 (mm/s), 20 (mm/s), 40 (mm/s), 80 (mm/s), and 100 (mm/s). The value $N(1/s)$ is the number of rotations of the mixing blade 122. In the present embodiment, when the vertical drive part 143 lowers the mixing blade 122, the rotational drive part 144 rotates the mixing blade 122 in a lifting direction to lift the dry powder of the holding vessel 11 (arrow A direction in Figs. 2 and 3).

The torque detecting part 145 is provided to detect the axial torque load T on the mixing blade 122 when the dry powder held in the holding vessel 11 is mixed by the mixing blade 122. The control part 141 stores the axial torque load T detected by the torque detecting part 145 in the RAM 141c via the I/O interface 141d. The weight detecting part 146 is provided to detect the vertical load added to the dry powder when the dry powder held in the holding vessel 11 is mixed by the mixing blade 122. Therefore, in the powder measuring device 10, the axial torque load T and vertical load can be detected by rotating the mixing blade 122 of the mixing part 12 within the dry powder.

The personal computer 20 is connected beforehand to the powder measuring device 10 so as to be capable of communication either by wire line or wirelessly, and the personal computer 20 has the function of receiving the axial torque load T detected by the torque detecting part 145 of the powder measuring device 10, and determining an indicator representing the characteristics (flow properties) of the dry powder layer as a viscosity $\eta$ (Pa·s) based on the received axial torque load T. The personal computer (PC) 20 of the present embodiment has the further function of determining the number of particle agglomeration n and the inter-particle bonding energy $F_0$ (J) working between the dry powder particles based on the determined viscosity. The personal computer 20 is configured by a body part 21, display part 22, and input part 23, as shown in Figs. 1 and 8.

As shown in Fig. 8, the body part 21 is configured by a ROM 211, CPU 212, RAM 213, hard disk 214, reading device 215, I/O interface 216, and image output interface 217, which are connected to a bus 218 so as to be capable of data communication.

The ROM 211 is configured by a mask ROM, PROM, EPROM, EEPROM or the like. The CPU 212 is provided to execute the powder analysis application program 214a after loading the program from the hard disk 214, described later, to the RAM 213. Thus, the CPU 212 determines the viscosity $\eta$ based on the axial torque load T received from the powder measuring device 10, and determines the number of particle agglomeration n and inter-particle bonding energy $F_0$ based on the viscosity $\eta$ by executing the powder analysis application program 214a. The CPU 212 has the function of calculating the height H of the mixing blade 122 of the mixing part 12 based on the vertical drive pulse signal sent by the control part 141 of the powder measuring device 10. The RAM 213 is configured by an SRAM, DRAM or the like, and is used when reading the powder analysis application program 214a and computer programs stored in ROM 211 and on the hard disk 214 described later. The RAM 213 is used as a work area of the CPU 12 when executing the powder analysis application program 214a stored on the hard disk 214.

The hard disk 214 has installed thereon an operating system, powder analysis application program 214a for analyzing a powder and which is described later, and data necessary for the execution of the powder analysis application program. The reading device 215 is configured by a floppy disk drive, CD-ROM drive, DVD-ROM drive or the like, and is capable of reading computer programs or data stored on a portable recording medium 4. Therefore, for example, the reading device 215 reads the powder analysis application program 214a from the portable recording medium 4, and installs the read powder analysis application program 214a on the hard disk 214. The powder analysis application program 214a and other computer programs used by the personal computer 20 need not be provided by the portable recording medium 4, inasmuch as such programs may be provided via an electric communication line (wire line or wireless) from an external PC or the like connected to the personal computer of the present embodiment so as to be capable of communication. For example, the powder analysis application program 214a may be stored on the hard disk of a server computer connected to the internet, such that the personal computer 20 of the present embodiment accesses the server computer via an electric communication line and downloads the powder analysis application program 214a from the server computer, and installs the downloaded powder analysis application program 214a on the hard disk 214. An operating system providing a graphical user interface environment, such as, for example, Microsoft Windows (registered trademark) or the like may be installed on the hard disk 214. In the following description, the powder analysis application program 214a of the present embodiment operates in the environment of such an operating system.

The I/O interface 216 may be, for example, a serial interface such as a USB, IEEE 1394, RS-232C or the like, or a parallel interface such as a SCSI, IDE, IEEE 1284 or the like, or an analog interface such as a D/A converter, A/D converter, or the like. The input part 23 is connected to the I/O interface 216. The I/O interface 216 is connected to the I/O interface 141d of the control part 141 of the powder measuring device 10 so as to be capable of inputting the axial torque load T and vertical load detected by the powder measuring device 10 to the personal computer 20. The image output interface 217 is connected to the display part 22 configured by an LCD (liquid crystal display), CRT or the like, so as to output image signals corresponding to image data received from the CPU 212 to the display part 22.

The input part 23 is capable of inputting data to the personal computer 20 when the user operates the input part 23. The display part 24 is provided to display images (screens) in accordance with the image signals received from the image output interface 217. Specifically, the display part 24 has the function of displaying the dry powder layer viscosity $\eta$, inter-particle bonding energy $F_0$, and number of particle agglomeration n.

Details of the powder analysis application program 214a installed on the hard disk 214 of the personal computer 20 are described below. The powder analysis application program 214a calculates the dry powder layer viscosity $\eta$, inter-particle bonding energy $F_0$, and number of particle agglomeration n based on the axial torque load T detected by the torque detecting part 145 (refer to Fig. 6) of the powder measuring device 10.

The powder analysis application program 214a converts the axial torque load T detected by the torque detecting part 145 of the powder measuring device 10 to a viscosity $\eta$ using the conversion equation (1) below. In conversion equation (1), $\eta$ (Pa·s) represents the viscosity, $T_1$ (mN·m) represents the average axial torque load, N (1/s) represents the number of rotations of the mixing blade 122, D (=23.5 mm) represents the diameter of the mixing blade 122, and $\pi ND$ (mm/s) represents the rotational speed.

$$\eta = 770 \times (T_1/\pi ND) \qquad\qquad (1)$$

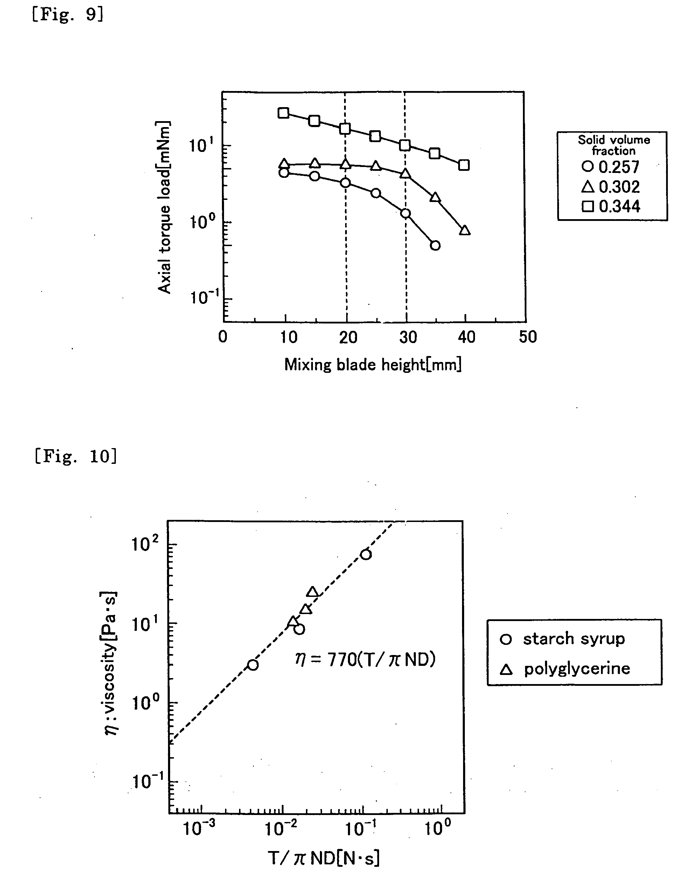

Details of the method for calculating the average axial torque load T1 using the conversion equation (1) are described below. First, the axial torque load T on the mixing blade 122 relative to the height H of the mixing blade 122 of the mixing part 12 is acquired for the dry powder regulated to solid volume fractions of 0.257, 0.302, and 0.344 using the aerator 13 of the powder measuring device 10. Thus, a graph is formed that plots the axial torque load T relative to the height H of the mixing blade 122, as shown in Fig. 9. In the present embodiment, when it is determined that that is scant change in the axial torque load T on the mixing blade 122 when the height H of the mixing blade 122 is in a range of approximately 20~30 mm, as indicated in Fig. 9, the average axial torque load $T_1$ is calculated as the average value of a plurality of axial torque loads T detected while the mixing blade 122 is in a height range of 20~30 mm.

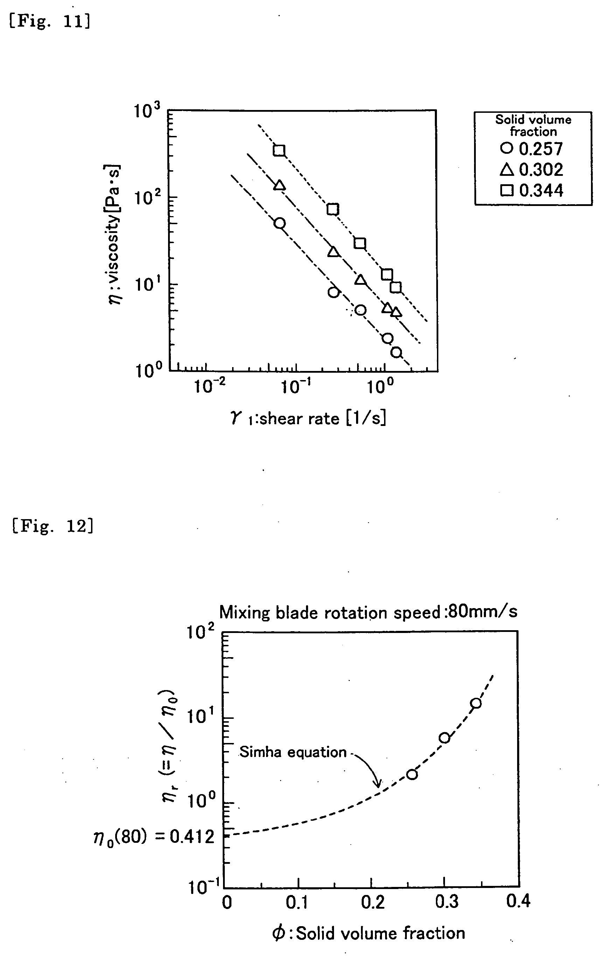

Details of the conversion equation (1) used to convert the average axial torque load T1 to a viscosity $\eta$ are described below. First, the viscosity $\eta$ is determined for a plurality of polyglycerine and a plurality of starch syrup solutions having different viscosities using a viscometer (Tokimec, Ltd.). An average axial torque load $T_1$ is acquired relative to the polyglycerine and starch syrups of determined viscosities $\eta$ using the powder measuring device 10 of the present embodiment. Thus, a graph is formed that plots the relationship between the viscosity $\eta$ and average axial torque load T1 of predetermined polyglycerine and starch syrups, as shown in Fig. 10. The relationship between the viscosity $\eta$ and average axial torque load $T_1$ of predetermined polyglycerine and starch syrups is calculated using the viscosity $\eta$ of the polyglycerine and starch syrups as a primary expression of the average torque load T1 since the proportional relationship can be estimated from the graph shown in Fig. 10.

Details of the proportional relationship of the viscosity $\eta$ and average torque load $T_1$ of the dry powder can be described by the conversion equation (1). The gravity number Np (W) of a typical mixing system is known to satisfy equation (2) below using pressure P (N/m2), density $\rho_1$ (kg/m3) of the liquid mixed by the mixing blade, rotation number N, and mixing blade diameter D.

$$N p = P / (\rho_1 \times N^3 \times D^5) \qquad (2)$$

From the relationship between pressure P and the axial torque load T, equation (2) can be expressed by equation (3) below.

$$N p \propto T / (\rho_1 \times N^2 \times D^5) \qquad (3)$$

The flow can be considered as a laminar flow since the flow properties of the dry powder around the mixing blade 122 of the present embodiment have been observed to be smooth flow. In this case, since the gravity number Np in a laminar flow state is known to have a proportional relationship with the reciprocal Re-1 of the Reynolds's number Re, the gravity number Np and the reciprocal Re-1 of the Reynolds's number Re satisfy the relational equation (4) below.

$$N p \propto R e - 1 \qquad (4)$$

The reciprocal Re-1 of the Reynolds's number Re is known to satisfy equation (5) below using viscosity $\eta$, density $\rho_1$ of the liquid mixed by the mixing blade, rotation number N, and mixing blade diameter D.

$$R e - 1 = \eta / (\rho_1 \times N \times D^2) \qquad (5)$$

Equation (6) below can be derived by substituting equation (5) in equation (4).

$$N p \propto \eta / (\rho_1 \times N \times D^2) \qquad (6)$$

Equation (7) can be derived from equations (6) and (3).

$$\eta / (\rho_1 \times N \times D^2) \propto T / (\rho_1 \times N^2 \times D^5) \qquad (7)$$

Equation (8) below can be derived when both sides of equation (7) are multiplied by $(\rho_1 \times N \times D^2)$.

$$\eta \propto T / N \times D^3 \qquad (8)$$

Therefore, the proportional relationship of viscosity $\eta$ and axial torque load T is theoretically supported by equation (8).

The powder analysis application program 214a determines the inter-particle bonding energy $F_0$ and number of particle agglomeration n from the viscosity $\eta$ calculated based on conversion equation (1) using equation (9) below. In equation (9) shown below, $\alpha 1$ (=0.58) represents the Brownian agglomeration rate constant, k represents the Boltzman coefficient (=$1.38 \times 10^{-23}$ (J/K)), K (=298 (K)) represents the absolute temperature, No (=$1.24 \times 10^{17}$ represents the number of particles of unit volume, $\eta_{0},min$ (=0.047) represents the theoretical dispersion medium viscosity, $\alpha_2$ (=0.6) represents the shear agglomeration rate constant, $\phi$ (=0.257, 0.302, 0.344) represents the solid volume fraction, n represents the number of particle agglomeration, $\gamma_1$ represents the shear rate, do (=1.58 $\mu$m) represents the dry powder (silica) particle diameter, $F_0$ (J) represents the inter-particle bonding energy, $N_b$ represents the number of cleaved chains of destroyed clusters, $\varepsilon$ represents the inter cluster void percentage, and $\eta$ represents the viscosity.

$$d n \diagup d t = (4 \cdot \alpha_1 \cdot k \cdot K \cdot N_0 \diagup 3 \cdot \eta_{0,min}) + (4 \cdot \alpha_2 \cdot \varphi \cdot n \cdot \gamma_1 \diagup \Pi) - (3 \cdot \Pi \cdot d_0{}^3 \cdot n \diagup 4 \cdot F_0 \cdot N_b) \cdot (n \diagup (1-\varepsilon) - 1) \cdot \eta \cdot \gamma_1{}^2 \qquad (9)$$

Equation (9) is an equation for evaluating the agglomeration of solid particles in a solid-liquid dispersion system in which solid particles are dispersed in a liquid and in a state of suspension (Usui, Hiromoto, 2000), described in "Prediction of Dispersion characteristics and Rheology in Dense Slurries," Hirotomo Usui, Journal of Chemical Engineering of Japan, vol. 35, No. 9, pp. 815-829; 2002. The present disclosure is the first application of the equation for evaluating agglomeration of solid particles in a solid-liquid dispersion system to a two-phase solid-gas system of solid particles dispersed in a gas.

The generation of clusters occurs with the participation of Brownian agglomeration and shear agglomeration, in which shear destruction occurs via fluid dynamic forces working on the cluster in a shear flow created by the mixing blade 122. Therefore, the equation (9) includes Brownian agglomeration (=$(4 \cdot \alpha_1 \cdot k \cdot T \cdot N_0 / 3 \cdot \eta_0)$), shear agglomeration (=$(4 \cdot \alpha_2 \cdot \varphi \cdot n \cdot \gamma_1 / \Pi)$), and shear destruction (=$(3 \cdot n \cdot d_0{}^3 \cdot n / 4 \cdot F_0 \cdot N_b) \cdot (n / (1-\varepsilon) - 1) \cdot \eta \cdot \gamma_1{}^2)$). The left side of equation (9) is calculated as dn/dt=0, the inter-particle bonding energy $F_0$ and number of particle agglomeration n can be calculated. In equation (9), the intra cluster void percentage $\varepsilon$ is defined by equation (10) below using the number of particle agglomeration n, and intra cluster void percentage $\varepsilon$, max when the number of particle agglomeration n is sufficiently large. In equation (10), the intra cluster void percentage $\varepsilon$, max when the number of particle agglomeration n is sufficiently large is defined by equation (11) below. In equation (11), $\phi$, max is the maximum load of particles (maximum solid volume fraction), and since the dry powder is maximally loaded in a glass container in the present embodiment, the actual measured value of the load rate determined from the weight of the dry powder is set as the maximum particle load rate (maximum solid volume fraction) $\phi$, max (=0.453).

$$\varepsilon = \varepsilon, \; max \; (1 - n^{-0.4}) \qquad (10)$$

$$\varepsilon, \; max = 1 - \varphi \diagup \varphi, \; max \qquad (11)$$

Details described below pertain to the applicability of equation 99), which is used for evaluating agglomeration of solid particles in a solid-liquid dispersion system, to a suspension of a two-phase solid-liquid system of gas and dry powder according to the present embodiment. It is generally known that a shear-thinning phenomenon occurs when viscosity of a liquid decreases in a solid-liquid dispersion system in conjunction with an increase in the shear rate of a mixing blade in the liquid in the solid-liquid dispersion system. The shear-thinning phenomenon is caused by the removal the bonds of particles in a state of agglomeration by an increase in the shear rate $\gamma_1$ (rotation speed n ND) of a mixing blade rotating in a liquid, such that no force is operative between solid particles in the liquid. The viscosity $\eta$ at a shear rate $\gamma_1$ (rotation speed n ND) of the mixing blade 122 was calculated for dry powder regulated at solid volume fraction $\phi$ of 0.257, 0.302, 0.344 using the aerator 13 of the powder measuring system 1 of the present embodiment. The shear rate $\gamma_1$ is defined by equation (12) below, and corresponds to the rotation speed n ND of the mixing blade 122 of equation (1). That is, the rotation speeds n N D (mm/s) of the mixing blade 122 of 5 (mm/s), 20 (mm/s), 40 (mm/s), 80 (mm/s), and 100 (mm/s) respectively correspond to shear rates $\gamma_1$ of 0.068 (l/s), 0.271 (l/s), 0.542 (l/s), 1.084 (l/s), and 1.355 (1/s).

$$\gamma_1 = (number \; of \; rotations \; of \; mixing \; blade \; 122/exterior \; circumferential \; length \; of \; the \; mixing \; blade \; 122) = N/\Pi D \qquad (12)$$

Thus, a graph plotting the viscosity $\eta$ relative to the shear rate $\gamma_1$ of the mixing blade 122 can be created, as shown in Fig. 11. From the graph in Fig. 11 it is possible to determine that the viscosity $\eta$ of the dry powder decreases in conjunction with an increase in the shear rate $\gamma_1$ of the mixing blade 122 in the dry powder used in the powder measuring system 1 of the present embodiment. Thus, the occurrence of a shear-thinning phenomenon typically observed in the liquid in a solid-liquid dispersion system can be determined even in a suspension (suspension of a dry powder and air) in a two-phase solid-gas system in the which the solid volume fraction is regulated at 0.257, 0.302, and 0.344 by the aerator 13. Therefore, in the present embodiment, since the dry powder exhibits substantially similar characteristics to the characteristics of a liquid in a solid-liquid dispersion system in which solid particles are dispersed and suspended in a liquid, it is possible to apply equation (9), which determines the number of particle agglomeration and inter-particle bonding energy of the dry powder based on viscosity.

Details of substituting theoretical dispersion medium viscosity $\eta_0$,min when using equation (9) are described below. The theoretical dispersion medium viscosity $\eta_0$,min uses the viscosity of water (approximately $0.8 \times 10^{-3} \sim 0.9 \times 10^{-3}$) when water is the dispersion medium, and uses the viscosity of air (0) when air is the dispersion medium, as in the present embodiment. In the present embodiment, a theoretical dispersion medium viscosity $\eta_0$, min (=0.047) that does not affect viscosity due to the presence of dry powder particles and agglomerated dry powder is used. Details of the method for deriving the theoretical dispersion medium viscosity $\eta_0$, min are described below.

First, the viscosity $\eta$ is determined for dry powder regulated to have a solid volume fraction of 0.257, 0.302, 0.344 by lowering the mixing blade 122 rotating at a rotation speed of 80 (mm/s) amidst the dry powder regulated at regulated to have a solid volume fraction of 0.257, 0.302, 0.344 by the aerator 13. Thus, a graph can be created showing the relationship between the solid volume fraction $\phi$ and the viscosity $\eta$, as shown in Fig. 12. A line along the Simha equations (13) through (16) is applied to a Simha cell model based on the viscosity $\eta$ plotted in the graph of Fig. 12. The Simha equation (13) expands Einstein equation (17) which is theoretically derived for a dilute dispersion system, and since the solid volume fraction $\phi$ is highly dependent on density, there is a correction value $\lambda$ $(\gamma)$ in equation (14) for correcting this dependency under high density conditions. In equations (13) through (16) $f^3$ is the cell total volume fraction, and $\gamma$ is the ratio of the cell radius to the particle radius.

$$\eta_r = \eta / \eta_0 = 1 + 2.5 \cdot \lambda(\gamma) \cdot \varphi \qquad (13)$$

$$\lambda(\gamma) = 4(1 - \gamma^7) / 4(1 + \gamma^{10}) - 25 \cdot \gamma^3(1 + \gamma^4) + 42 \cdot \gamma^5 \qquad (14)$$

$$\gamma^3 = \varphi / f(1 - (\varphi 1/3/f))^3 \qquad (15)$$

$$\varphi, max = f^3 / 8 \qquad (16)$$

$$\eta_r = 1 + 2.5 \cdot \varphi \qquad (17)$$

The viscosity $\eta_0$ (80) at solid volume fraction 0 and a rotation speed of 80 (mm/s) of the mixing blade 122 can be calculated from the curve along the Simha equation (13) drawn in the graph of Fig. 12. The solid volume fraction 0 represents a condition in which only air is held in the holding vessel 11, and the theoretical dispersion medium viscosity $\eta_0$ (80) of a dispersion medium of air can be derived when the rotation speed of the mixing blade 122 is 80 (mm/s). Therefore, equation (13) appears as shown in Fig. 12 via equations (14) through (16).

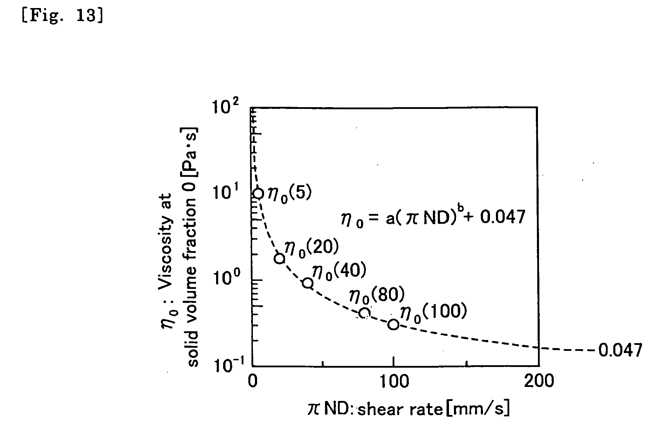

Similarly, theoretical dispersion medium viscosities $\eta_0$ (5), $\eta_0$ (20), $\eta_0$ (40), $\eta_0$ (100) are derived for other rotation speeds of the mixing blade 122, that is, 5 (mm/s), 20 (mm/s), 40 (mm/s), 100 (mm/s). Thus, a graph can be created plotting the theoretical dispersion medium viscosity of air $\eta_0$ when the solid volume fraction is 0 relative to rotation speeds $\pi$ND of the mixing blade 122, that is, 5 (mm/s), 20 (mm/s), 40 (mm/s), 100 (mm/s), as shown in Fig. 13. Equation (18) below can be derived by drawing an approximation curve (attenuation curve) for five theoretical dispersion medium viscosities $\eta_0$ ($\eta_0$ (5), $\eta_0$ (20), $\eta_0$ (40), $\eta_0$ (100)) plotted in the graph of Fig. 13.

$$\eta_0 = a \cdot (\pi N D) b + 0.047 \tag{18}$$

The values a and b in equation (18) are coefficients determined when deriving the approximation curve, and are a positive number and a negative number, respectively. When it is assumed that the inter-particle agglomeration action of the dry powder increases as the rotation speed of the mixing blade 122 slows, and the inter-particle agglomeration action of the dry powder decreases as the rotation speed of the mixing blade 122 increases, the theoretical dispersion medium viscosity $\eta_0$, min (=0.047) obtained under a high rotation speed condition of the mixing blade 122 can be derived as the theoretical viscosity least affected by the viscosity due to the presence of dry powder particles and agglomeration of dry powder.

Details of the method of calculating the inter-particle bonding energy $F_0$ and number of particle agglomeration n are described below. First, when the maximum load percentage (maximum solid volume fraction) $\phi$, max is (=0.453) inequation (11), $\varepsilon$, max is derived by substituting solid volume fractions $\phi$ (=0.257, 0.302, 0.344). Then, the determined $\varepsilon$, max and an initial value of the assumed number of particle agglomeration n (=2) are substituted in the equation (10) to determine the intra cluster void percentage $\varepsilon$. The calculated intra cluster void percentage $\varepsilon$ number of particle agglomeration n, and dry powder (silica) particle diameter do are used to calculate the cluster diameter dc defined by equation (19) below.

$$d_c = d_0 \cdot (n / (1 - \varepsilon))^{1/3} \tag{19}$$

The apparent solid volume fraction $\phi$ is determined using the cluster diameter dc determined by equation (19), and the cluster number Nc per unit volume. In the present embodiment, an apparent solid volume fraction $\phi$ that differs from the measured solid volume fraction is used because the solvent with suspended clusters is introduced into the clusters, and the cluster behave as single particles. Specifically, the apparent solid volume fraction $\phi$ is calculated using equation (20) below defined by the cluster diameter dc and cluster number Nc per unit volume.

$$\varphi = N_c \times (\pi \cdot d_c^3 / 6) \tag{20}$$

The cluster number Nc per unit volume used in equation (20) satisfies equation (21) below by means of the particle number No per unit volume, and number of particle agglomeration n included in one cluster.

$$N_c = N_0 / n \tag{21}$$

The viscosity $\eta$ is determined from Simha equations (13 through (16) using the apparent solid volume fraction $\phi$ determined by equation (20). Specifically, the cell total volume fraction $f^3$ is calculated by substituting the measured maximum load percentage (maximum solid volume fraction) $\phi$, max (=0.453) in equation (16). Then, the ratio $\gamma$ of the cell radius to the particle radius is determined by substituting the apparent solid volume fraction $\phi$, and the calculated cell total volume fraction f3 in equation (15). The determined $\gamma$ is then substituted in equation (14), and the correction value $\lambda(\gamma)$ substituted for $\gamma$ are substituted in equation (13). The number of agglomeration particles n increases and the calculation is repeated until the calculated viscosity $\eta$ substantially matches the viscosity $\eta$ determined from the axial torque load T detected by the powder measuring system 1 of the present embodiment. Thus, the number of particle agglomeration n is determined based on the viscosity $\eta$ determined from the axial torque load T detected by the powder measuring system 1. Next, the inter-particle bonding energy $F_0$ is determined from equation (9) based on the determined number of particle agglomeration n. Once the inter-particle bonding energy $F_0$ is determined, various powder conditions can be regulated and the fluid properties of the powder layer can be evaluated before handling. That is, when powder layer shaving different powder contents are handled under different shear rate conditions, the viscosity of the powder layer can be estimated. Thus, basic design data can be obtained for powder handling devices pertaining to the transport of powder under optional conditions, mixing operations and the like.

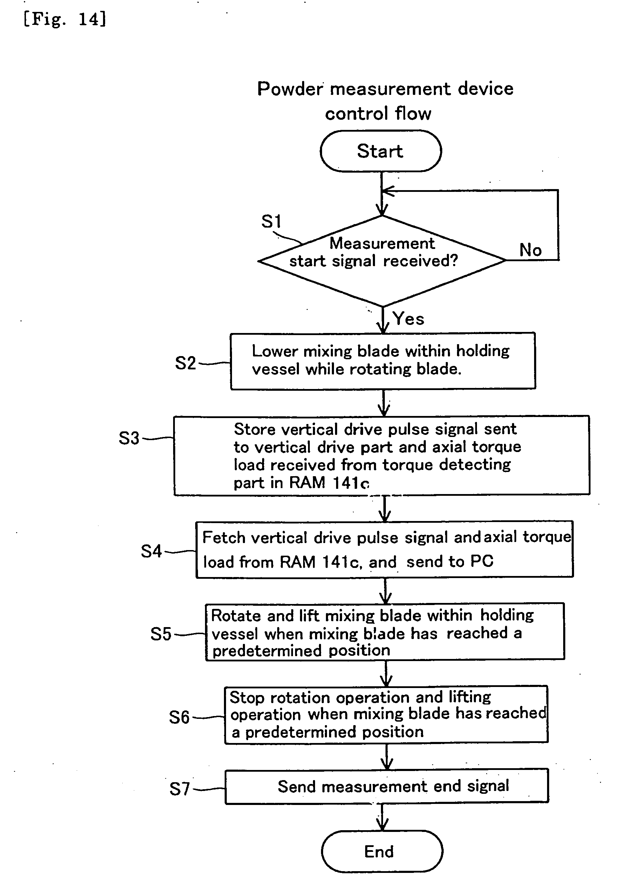

Fig. 14 is a flow chart showing the measurement flow of the dry powder performed by the control part of the powder measuring device of the embodiment of the powder measuring system of Fig. 1. Details of the dry powder measurement flow performed by the control part of the powder measuring device of the powder measuring system 1 of the embodiment of the present invention are described below with reference to Fig. 14.

First, a fixed amount of dry powder is introduced into the holding vessel 11, and the condition of the dry powder is rendered uniform by rotating the mixing blade 122 relative to the dry powder accommodated in the holding vessel 11. The dry powder is prepared for measurement to begin as a predetermined solid estimated fraction $\phi$ by feeding a predetermined amount of air from the aerator 13 to the dry powder of the holding vessel 11 as necessary.

In step S1, the CPU 141b of the control part 141 of the powder measuring device 10 awaits the reception of a measurement start signal sent from the personal computer 20, and determines whether or not such a measurement start signal has been received. When a measurement start signal has not been received, the determination of step S1 is repeated until such a measurement start signal is received. When it is determined in step S1 that a measurement start signal has been received from the personal computer 20, the in step S2 the mixing blade 122 of the mixing part 12 is rotated and lowered into the holding vessel 11. Specifically, the CPU 141b fetches the vertical drive pulse signal stored beforehand in the ROM 141a, and transmits the signal to the vertical drive part 143 of the body part 14, and fetches the rotational drive pulse signal stored beforehand in the ROM 141a, and transmits the signal to the rotational drive part 144 of the body part 14, and the mixing blade 122 of the mixing part 12 is lowered into the holding vessel 11 while the mixing blade 122 is rotated in the arrow A direction in Figs. 2 and 3.

Then, in step S3, the CPU 141b stores the vertical drive pulse signal received by the vertical drive part 143, and the axial torque load T on the mixing blade 122 received from the torque detecting part 145 in the RAM 141c. In step S4, the CPU 141b fetches the vertical drive pulse signal and axial torque load T stored in the RAM 141c, and sends the data to the personal computer 20. In step S5, the CPU 141b temporarily stops the mixing blade 122 when the vertical drive pulse signal stored beforehand in ROM 141a attains a predetermined number, and again sends the vertical drive pulse signal and lifts the rotating mixing blade 122 from within the holding vessel 11. Thereafter, in step S6, the CPU 141b stops the rotation operation and lifting operation of the mixing blade 122 when the vertical drive pulse signal stored beforehand in ROM 141a attains a predetermined number. In step S7, the CPU 141b sends a measurement end signal to the personal computer 20 and ends the measurement flow.

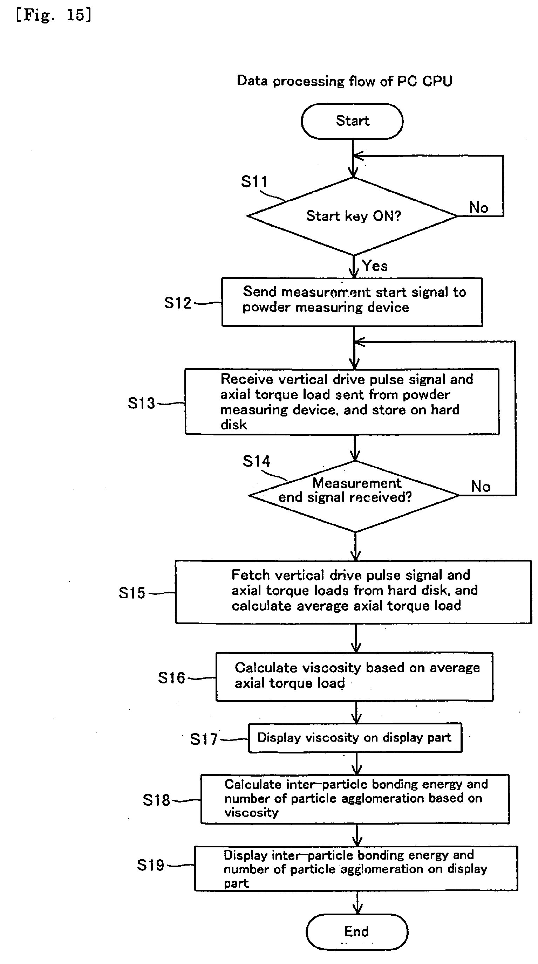

Fig. 15 is a flow chart showing the data processing flow of the CPU of the embodiment of the powder measuring system of Fig. 1. Details of the data processing flow performed by the CPU 212 of the personal computer 20 of the powder measuring system 1 of the embodiment of the present invention are described below with reference to Fig. 15.

In step S11, the CPU 212 of the body part 21 of the personal computer 20 determines whether or not the start switch is turned ON. When it is determined that the start switch is not turned ON, the determination of step S11 is repeated until the start switch is turned ON. When it is determined that the start switch ahs been turned ON, then in step S12 the CPU 212 sends a measurement start signal to the body part 14 of the powder measuring device 10. In step S13, the CPU 212 receives a vertical drive pulse signal and axial torque load from the powder measuring device 10, and stores the data on the hard disk 214. In step S14, the CPU 212 determines whether or not a measurement end signal has been received from the body part 14 of the powder measuring device 10. When the CPU 212 determines that a measurement end signal has not been received, the process of step S1 3is repeated.

In the present embodiment, when the CPU 212 has determined that a measurement end signal has been received, then in step S15 the CPU 212 fetches the vertical drive pulse signals and axial torque loads T stored on the hard disk 214, and averages the axial torque loads T to calculate the average axial torque load $T_1$ based on the number of vertical drive pulse signals received. That is, the average axial torque load $T_1$ is calculated as the average value of a plurality of axial torque loads T detected while the height H of the mixing blade 122 is in a range of approximately 20~30 mm.

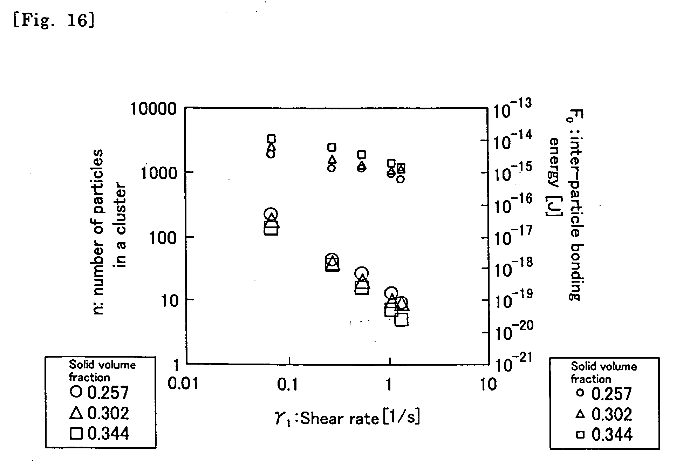

In step S16 of the present embodiment, the CPU 212 calculates the dry powder layer viscosity $\eta$ based on conversion equation (1) for converting the average axial torque load $T_1$ stored in the ROM 211 to a viscosity $\eta$. In step S17, the CPU 212 displays the dry powder layer viscosity $\eta$ on the display part 22. In step S18, the CPU 212 calculates the inter-particle bonding energy $F_0$ and number of particle agglomeration n of the dry powder based on equation (9) for converting the viscosity $\eta$ of the dry powder layer calculated in step S16 to the inter-particle bonding energy $F_0$ and number of particle agglomeration n. Thereafter, in step S19, the CPU 212 displays the inter-particle bonding energy $F_0$ and number of particle agglomeration n of the dry powder on the display part 22, and ends the processing of the data processing flow. Specifically, the display part 22 displays a graph indicating the inter-particle bonding energy $F_0$ and number of particle agglomeration n relative to the shear rate $\gamma_1$ of the mixing blade 122, as shown in Fig. 16.

In the present embodiment described above, a single indicator of a viscosity $\eta$ representing the flow properties (behavior) of a dry powder layer can be obtained by providing a personal computer 20 for determining an indicator representing the characteristics of a dry powder layer as a viscosity $\eta$ based on the axial torque load T detected by a torque detecting part 145 of the powder measuring device 10. As a result, it is possible to evaluate the dynamic behavior of a dry powder using the viscosity $\eta$ determined by the personal computer 20, which is important when designing transport methods for transporting a dry powder, and mixing methods for mixing dry powder in a large scale plant and the like. The dynamic behavior of a dry powder layer can be evaluated beforehand, such that problems involving the dry powder that occur in a plant can be rapidly counteracted based on the evaluation. Furthermore, a new indicator of the dry powder particles such as inter-particle bonding energy and number of particle agglomeration and the like can be obtained by substituting the viscosity $\eta$, which is an indicator representing the characteristics of the dry powder layer determined by the personal computer 20, in the model equation (9) (Usui Hiromoto, 2000) for evaluating agglomeration properties established in solid-liquid dispersion systems.

In the present embodiment, the axial torque load T acting on the mixing blade 122 due to the dry powder layer around the mixing blade 122 can be accurately detected since the mixing blade 122 lifts and mixes a dry powder in an upward direction while being lowered within a dry powder layer of the holding vessel 11, which suppresses problems caused by the dry powder below the mixing blade 122 being compressed by the mixing blade 122 and the increasing effect of the compressed powder on the axial torque load T acting on the mixing blade 122, thus differing from the case wherein the mixing blade 122 presses the dry powder in a downward direction while being lowered within a dry powder layer. As a result, the viscosity $\eta$ of the dry powder layer can be accurately determined based on the accurately detected axial torque load T of the dry powder layer being mixed by the mixing blade 122.

In the present embodiment, the viscosity $\eta$ of a dry powder can be easily determined from the an axial torque load detected by the torque detecting part 145 by storing a proportional relation equation (1) of the viscosity $\eta$ and axial torque load T obtained using the well known viscosities of polyglycerines and starch syrups in the body part 21 of the personal computer 20, and by substituting the axial torque load T detected by the torque detecting part 145 in the axial torque T and viscosity $\eta$ proportional relation (1).

In the present embodiment, the axial torque load T substituted in equation (1) used by the powder analysis application program 214a stored on the hard disk 214 is an average axial torque load T1, that is, an average value of a plurality of axial torque loads T detected while the mixing blade was disposed in a height range of 20.0~30.0 mm within the holding vessel 11, the viscosity $\eta$ can be determined using this average axial torque load T1 even when the axial torque load T on the mixing blade 122 is variably dispersed by the height position of the mixing blade 122 in the dry powder held in the holding vessel 11. As a result, dispersion of the determined viscosity $\eta$ can be suppressed when such dispersion is caused by dispersion of the dry powder within the holding vessel 11. Specifically, since the viscosity $\eta$ can be determined without using the axial torque load T detected near the top (30~50 mm) of the holding vessel 11, the viscosity $\eta$ can be determined without using the axial torque load T, which tends to decrease in that location, even when this decreasing tendency occurs due to the free surface effect of the dry powder near the top of the holding vessel 11. Even when the axial torque load T detected near the bottom (5~20 mm) of the holding vessel 11 occurs due to the compression caused by the pressure of the dry powder, the viscosity $\eta$ can be determined without using the axial torque load T, which tends to increase in that location. According to these results, the viscosity $\eta$ of a dry powder layer can be determined more accurately and easily based on the stable axial torque load T detected while the mixing blade 122 is positioned in a height range (20.0~30.0 mm) near the center of the holding vessel 11 in the height direction.

In the present embodiment, the inter-particle bonding energy $F_0$ and number of particle agglomeration n can be determined under a theoretical viscosity condition in which there is scant effect on viscosity due to the presence of dry powder particles and dry powder agglomeration by using a theoretical dispersion medium viscosity $\eta_0$, min (=0.047) obtained under a condition of high speed rotation of the mixing blade 122, and using equation (9) when determining the inter-particle bonding energy $F_0$ and number of particle agglomeration n from the viscosity $\eta$ determined based on the axial torque load T (average axial torque load T1) detected by the torque detecting part 145 of the powder measuring device 10.

In the present embodiment, preparations for starting measurement are made before determining whether or not a measurement start signal has been received in step S1 shown in Fig. 14, and measurements can be made which have excellent reproducibility since bias caused by the condition of the dry powder in the holding vessel 11 can be eliminated by making the condition of the dry powder uniform through rotating the mixing blade 122 of the mixing part 12 relative to the dry powder held in the holding vessel 11.

The embodiment disclosed here is an example in all respects is not to be considered limiting in any way. The scope of the present invention is indicated by the scope of the claims and not by the embodiment described above, and may be variously modified insofar as such modifications do not depart from the meaning and equivalences of the scope of the claims.

for example, although the present embodiment is described by way of example using the mixing blade of a mixing part that is rotatable and movable in vertical directions relative to a holding vessel accommodating a dry powder, the present invention is not limited to this example inasmuch as the holding vessel accommodating the dry powder may be rotatable and movable in vertical directions while the mixing blade of the mixing part is in a stationary condition.

Although the embodiment is described by way of example of determining a viscosity from an axial torque load detected by a torque detecting part of a powder measuring device and determining the number of particle agglomeration and inter-particle bonding energy of a dry powder from this viscosity, the present invention is not limited to this example inasmuch as the flow properties (behavior) of the dry powder layer may also be evaluated by the viscosity alone determined from the axial torque load detected by the torque detecting part of the powder measuring device.

Although the present embodiment is described by way of an example of a personal computer receiving an axial torque load detected by a powder measuring device and a CPU of the personal computer converting the received axial torque load to a viscosity when the personal computer is connected to the powder measuring device via a communication line, the present invention is not limited to this example inasmuch as the powder measuring device need not be provided as a separate device, and the viscosity can be determined by detecting the axial torque load by the powder measuring device alone.

**Claims**

1. A powder measuring system comprising:

   a holding vessel for holding a powder;
   a mixing blade for mixing the powder held in the holding vessel;
   detecting part for detecting a load on the mixing blade when the mixing blade rotates in the powder; and
   a control part for obtaining a viscosity as a powder characteristic based on the load detected by the detecting part.

2. The powder measuring system according to Claim 1, wherein
   the control part obtains the viscosity based on the load detected by the detecting part when the mixing blade descends through the powder of the holding vessel and rotates in a lifting direction of the powder.

3. The powder measuring system according to Claim 1, wherein the load is the axial torque of the mixing blade.

4. The powder measuring system according to any of Claims 1 - 3, wherein
   the holding vessel and the mixing blade relatively movable in vertical directions, and relatively rotatable.

5. The powder measuring system according to any of Claims 1 - 4, wherein
   the control part obtains the viscosity of the powder based on a predetermined relational equation of a viscosity and a load.

6. The powder measuring system according to Claim 5, wherein the relational equation is a proportional relation equation.

7. The powder measuring system according to Claims 5 and 6, wherein
   the load is an average value of a first load and a second load, the first load detected by the detection part when the mixing blade is located at a first height in the holding vessel and the second load detected by the detection part when the mixing blade is located at a second height in the holding vessel.

8. The powder measuring system according to Claim 7, wherein
   the first and second heights are near the center part of holding vessel in the height direction.

9. The powder measuring system according to any of Claims 1 - 8, further comprising:

   a ventilation device for supplying air to the powder in the holding vessel;

   wherein the control part obtains the viscosity as the powder characteristic based on the load detected by the detecting part when the mixing blade descends through the powder of the holding vessel and rotates in a lifting direction of the powder under supplying air by the ventilation device.

10. The powder measuring system according to any of Claims 1 - 9, wherein
    the control part obtains an inter-particle bonding energy or a number of agglomerated particles based on the viscosity.

11. The powder measuring system according to any of Claims 1 - 10 comprising:

    an analyzer provided with a holding vessel, mixing blade, and sensor; and a computer provided with a control part, and connected to the analyzer so as to be capable of communication;

    wherein the control part of the computer receives a load on the mixing blade detected by the sensor from the analyzer, and obtains a viscosity as a powder characteristic based on the load received by the analyzer.

**12.** A powder measuring method comprising:

a step of detecting a load when a mixing blade descends through a powder of a holding vessel and rotates in a lifting direction of the powder; and
a step of obtaining a viscosity as a powder characteristic based on the detected load on the mixing blade.

**13.** The powder measuring method according to Claim 12, wherein
the step of obtaining the viscosity includes a step of obtaining the viscosity from the detected load of the mixing blade based on a relational equation of viscosity and predetermined loads.

**14.** The powder measuring method according to Claims 12 and 13 further comprising:

a step of obtaining an inter-particle bonding energy or a number of agglomerated particles based on the viscosity.

**15.** The powder measuring method according to Claim 14, wherein
the step of obtaining the inter-particle bonding energy or the number of agglomerated particles includes a step of obtaining the inter-particle bonding energy or the number of agglomerated particles in a air based on the viscosity when postulating the powder in the air that substantially represents characteristics identical to a characteristics of a solid particle dispersed and suspended in the liquid.

[Fig. 1]

[Fig. 2]

[Fig. 3]

[Fig. 4]

[Fig. 5]

[Fig. 6]

[Fig. 7]

~141

Control part

141d — I/O interface ⟷ CPU ⟷ ROM ~141a

⟷ RAM ~141c

141b

[Fig. 8]

20

PC

21

CPU 212 — 213

211 — ROM ⟷ RAM

23

216

Input part ⟹ I/O interface ⟷ Powder analysis application program ~214a / ~214

Hard disk

4

Display part ⟸ Image output interface ⟷ Reading device

22

Body part 217 218 215

[Fig. 9]

[Fig. 10]

[Fig. 11]

[Fig. 12]

[Fig. 13]

$$\eta_0 = a(\pi ND)^b + 0.047$$

[Fig. 14]

Powder measurement device
control flow

```
                    ( Start )
                        |
                        v  <------------------+
      S1 ──      /  Measurement     \         |
               <  start signal received? >--- No
                \                   /
                        |
                        | Yes
                        v
      S2 ── | Lower mixing blade within holding     |
            | vessel while rotating blade.          |
                        |
                        v
      S3 ── | Store vertical drive pulse signal sent |
            | to vertical drive part and axial torque|
            | load received from torque detecting    |
            | part in RAM 141c                       |
                        |
                        v
      S4 ── | Fetch vertical drive pulse signal and axial torque |
            | load from RAM 141c, and send to PC               |
                        |
                        v
      S5 ── | Rotate and lift mixing blade within holding |
            | vessel when mixing blade has reached a       |
            | predetermined position                       |
                        |
                        v
      S6 ── | Stop rotation operation and lifting        |
            | operation when mixing blade has reached    |
            | a predetermined position                   |
                        |
                        v
      S7 ── | Send measurement end signal |
                        |
                        v
                    ( End )
```

[Fig. 15]

Data processing flow of PC CPU

```
                        ┌─────────┐
                        │  Start  │
                        └────┬────┘
                             │ ◄──────────────────┐
                             ▼                     │
                        ╱─────────╲                │
       S11          ╱               ╲    No        │
                  ◄   Start key ON?    ►───────────┘
                    ╲               ╱
                      ╲─────────╱
                             │ Yes
                             ▼
              ┌──────────────────────────────┐
     S12      │ Send measurement start signal │
              │ to powder measuring device    │
              └──────────────┬───────────────┘
                             │ ◄──────────────────┐
                             ▼                     │
              ┌──────────────────────────────┐    │
              │ Receive vertical drive pulse  │    │
              │ signal and axial torque load  │    │
     S13      │ sent from powder measuring    │    │
              │ device, and store on hard     │    │
              │ disk                          │    │
              └──────────────┬───────────────┘    │
                             ▼                     │
                        ╱─────────╲                │
       S14          ╱   Measurement  ╲   No        │
                  ◄   end signal       ►───────────┘
                    ╲   received?    ╱
                      ╲─────────╱
                             │
                             ▼
              ┌──────────────────────────────┐
              │ Fetch vertical drive pulse    │
     S15      │ signal and axial torque loads │
              │ from hard disk, and calculate │
              │ average axial torque load     │
              └──────────────┬───────────────┘
                             ▼
              ┌──────────────────────────────┐
     S16      │ Calculate viscosity based on  │
              │ average axial torque load     │
              └──────────────┬───────────────┘
                             ▼
              ┌──────────────────────────────┐
     S17      │ Display viscosity on display  │
              │ part                          │
              └──────────────┬───────────────┘
                             ▼
              ┌──────────────────────────────┐
              │ Calculate inter-particle      │
     S18      │ bonding energy and number of  │
              │ particle agglomeration based  │
              │ on viscosity                  │
              └──────────────┬───────────────┘
                             ▼
              ┌──────────────────────────────┐
              │ Display inter-particle        │
     S19      │ bonding energy and number of  │
              │ particle agglomeration on     │
              │ display part                  │
              └──────────────┬───────────────┘
                             ▼
                        ┌─────────┐
                        │   End   │
                        └─────────┘
```

[Fig. 16]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• EP 798549 A

### Non-patent literature cited in the description

• **HIROTOMO USUI.** Prediction of Dispersion characteristics and Rheology in Dense Slurries. *Journal of Chemical Engineering of Japan,* 2002, vol. 35 (9), 815-829